(19) Europäisches Patentamt
European Patent Office
Office européen des brevets

(11) Veröffentlichungsnummer: **0 279 198 B1**

(12) # EUROPÄISCHE PATENTSCHRIFT

(45) Veröffentlichungstag der Patentschrift: **15.07.92**

(51) Int. Cl.5: **C08G 18/10**, C08G 18/28, C08G 18/32, C08G 18/48, C09D 7/06, C09D 5/44

(21) Anmeldenummer: **88100762.9**

(22) Anmeldetag: **20.01.88**

Verbunden mit 88901245.6/0342199 (europäische Anmeldenummer/Veröffentlichungsnummer) durch Entscheidung vom 01.06.90.

(54) **Elektrotauchlack.**

(30) Priorität: **21.01.87 DE 3701547**

(43) Veröffentlichungstag der Anmeldung:
**24.08.88 Patentblatt 88/34**

(45) Bekanntmachung des Hinweises auf die Patenterteilung:
**15.07.92 Patentblatt 92/29**

(84) Benannte Vertragsstaaten:
**AT BE CH DE ES FR GB IT LI NL SE**

(56) Entgegenhaltungen:
**DE-B- 1 078 321**
**US-A- 2 917 486**
**US-A- 4 137 276**
**FR-A- 2 162 015**
**US-A- 4 009 307**
**US-A- 4 522 986**

(73) Patentinhaber: **BASF Lacke + Farben Aktiengesellschaft**
**Max-Winkelmann-Strasse 80**
**W-4400 Münster(DE)**

(72) Erfinder: **Geist, Michael, Dr.**
**Fürstenstrasse 28**
**W-6700 Ludwigshafen(DE)**
Erfinder: **Fobbe, Helmut, Dr.**
**Liebigweg 5**
**W-4400 Münster(DE)**
Erfinder: **Strauss, Udo, Dr.**
**Wüllnerstrasse 16**
**W-4400 Münster(DE)**
Erfinder: **Ott, Günther, Dr.**
**Von-Holte-Strasse 101 a**
**W-4400 Münster(DE)**
Erfinder: **Arlt, Klaus, Dr.**
**Merschwiese 41**
**W-4403 Senden(DE)**
Erfinder: **Cibura, Klaus, Dr.**
**25680 W. 12 Mile Road**
**Southfield, MI 48034(US)**

(74) Vertreter: **Leifert, Elmar, Dr.**
**BASF Lacke + Farben AG Patentabteilung**
**Max-Winkelmann-Strasse 80 Postfach 61 23**
**W-4400 Münster(DE)**

EP 0 279 198 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen wäßrigen, kathodisch abscheidbaren Elektrotauchlack und die Verwendung von Polyetherurethanen als Verlaufshilfsmittel in wäßrigen, kathodisch abscheidbaren Elektrotauchlacken.

Die kationische Elektrotauchlackierung (KTL) ist ein vor allem zum Grundieren häufig angewandtes Lackierverfahren, insbesondere im Bereich der Automobilgrundierungen, bei dem wasserverdünnbare, kationische Gruppen tragende Kunstharze mit Hilfe von Gleichstrom auf elektrisch leitende Körper aufgebracht werden.

Elektrotauchlackbäder des oben beschriebenen Typs sind z.B. in folgenden Patentdokumenten offenbart: US-PS 3,799,854; US-PS 3,984,299; US-PS 4,031,050; US-PS 4,252,703; US-PS 4,332,711 und DE-PS 3108073.

Es ist bekannt, daß mit Lacksystemen dieser Art qualitativ hervorragende Lackierungen erzielt werden können.

Ein Nachteil all dieser Systeme ist jedoch ihre Sensitivität gegenüber in die KTL-Bäder eingebrachten Verunreinigungen. Für die Störsubstanzen gibt es mannigfache Quellen. So können z.B. im Automobilbau Tiefziehfette, Korrosionsschutzfette, Nahtabdichtungsmaterialien, Schmierfette der Förderanlagen usw. in die KTL-Bäder gelangen. Bei der AbScheidung des Lackmaterials werden diese Verunreinigungen mit in den Film eingebracht. Beim Einbrennen des Lackfilms kann es dann aufgrund der Unverträglichkeit zwischen dem Lackbindemittel und der Verunreinigung zu den dem Fachmann wohlbekannten Filmstörungen wie Kratern und dergleichen kommen.

In der Vergangenheit wurden sehr umfangreiche Versuche unternommen, durch Additive die Unverträglichkeit zu überbrücken bzw. das Lackmaterial störungsresistenter einzustellen. Eine Möglichkeit hierfür bietet die Verwendung von Silikonölen. Diese können wassermischbar oder unmischbar sein. Ebenso können sie mit reaktiven Gruppen modifiziert sein, so z.B. mit Hydroxyl- oder Aminogruppen. Gemeinsam ist jedoch dieser Gruppe von Additiven, daß sie zwar die Oberflächenstörungen beseitigen können, jedoch in aller Regel schwerwiegende Haftungsprobleme für nachfolgende Lackschichten wie Füller und Decklacke verursachen.

Daher wurde versucht, durch geeignete organische Harze die Kontaminationsresistenz der KTL-Bindemittel zu verbessern. In der Japanischen Patent-Anmeldung JP-A 6 1115 974 wird ein Umsetzungsprodukt aus einem mit Dimerfettsäure modifizierten Polyepoxidharz mit Polyoxyalkylenpolyamin beschrieben. Dieses Produkt soll die Kraterneigung von KTL-Materialien unterdrücken. In der EP-A 70 550 wird ein Umsetzungsprodukt eines Polyepoxidharzes mit einem Polyoxyalkylenpolyamin mit primären Aminogruppen beschrieben. Auch dieses Material soll die KTL-Filme verbessern durch Eliminierung oder zumindest Minimierung der Kraterneigung. Aber auch diese Produkte führen zu nachhaltigen Zwischenhaftungsproblemen für Füller und Decklacke.

Es ist Aufgabe der vorliegenden Erfindung, Polyetherurethane, die als Verlaufshilfsmittel geeignet sind, sowie ein Verfahren zu ihrer Herstellung anzugeben.

Überraschenderweise wurde nun gefunden, daß diese genannten Probleme beseitigt werden, wenn man ein Produkt zur Verfügung stellt, das aufgrund seiner chemischen Struktur in KTL-Bindemitteln die Kraterneigung reduziert und andererseits über funktionelle Gruppen mit dem Vernetzungshilfsmittel im KTL-Bindemittel während des Einbrennvorganges reagieren kann. Diese Additive sind Umsetzungsprodukte von Polyalkylenetherdiolen mit aromatischen und/oder aliphatischen Diisocyanaten im Molverhältnis von etwa m: (m + 1) (d.h., das Diisocyanat wird in einem Überschuß von etwa einem Mol eingesetzt); die verbliebenen Isocyanatgruppen werden in einem zweiten Reaktionsschritt mit sekundären Aminen weitermodifiziert.

Gegenstand der Erfindung ist ein wäßriger, kathodisch abscheidbarer Elektrotauchlack, der dadurch gekennzeichnet ist, daß er ein Polyetherurethan als Verlaufshilfsmittel enthält, wobei das Polyetherurethan durch ein Herstellungsverfahren erhältlich ist, bei dem ein Polyalkylenetherdiol mit einem Überschuß an aromatischen und/oder aliphatischen Diisocyanaten zu einem Zwischenprodukt mit endständigen Isocyanatgruppen umgesetzt wird und diese Isocyanatgruppen anschließend mit sekundären Aminen, die gegebenenfalls zusätzlich blockierte primäre Aminogruppen enthalten können, umgesetzt werden.

Das Polyetherurethan hat die allgemeine Formel

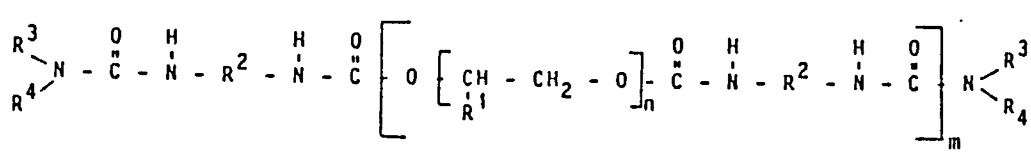

in der bedeuten:

| | |
|---|---|
| $R^1$ = | H oder ein Alkylrest mit 1 bis 8 C-Atomen |
| $R^2$ = | ein Alkylenrest mit 2 bis 10 C-Atomen oder ein Cycloalkylenrest mit 6 bis 20 C-Atomen oder ein Arylenrest mit 6 bis 20 C-Atomen |
| $R^3$ und $R^4$ = | ein ggf. substituierter Alkylrest mit 1 bis 8 C-Atomen oder gemeinsam ein Ring, dessen Glieder $R^3$ und $R^4$ sind |
| n = | 2 bis 180 |
| m = | 1 bis 15 |

Die Erfindung betrifft auch die Verwendung von Polyetherurethanen, die durch ein Herstellungsverfahren erhältlich sind, bei dem ein Polyalkylenetherdiol mit einem Überschuß an aromatischen und/oder aliphatischen Diisocyanaten zu einem Zwischenprodukt mit endständigen Isocyanatgruppen umgesetzt wird und diese Isocyanatgruppen anschließend mit sekundären Aminen, die gegebenenfalls zusätzlich blockierte primäre Aminogruppen enthalten können, umgesetzt werden, als Verlaufshilfsmittel in wäßrigen, kathodisch abscheidbaren Elektrotauchlacken.

Die Polyalkylenetherdiole sind Umsetzungsprodukte von Wasser, aliphatischen oder aromatischen Diolen und Monoepoxiden. Das Molekulargewicht kann hierbei über die Stöchiometrie in weiten Grenzen variiert werden. Bevorzugt werden für den erfindungsgemäßen Zweck Molekulargewichte zwischen 500 und 8000, insbesondere werden Molekulargewichte zwischen 1000 und 5000 bevorzugt. Die geeigneten Monoepoxide sind dem Fachmann geläufig. Hierzu gehören z.B. Ethylenoxid, Propylenoxid und Butylenoxid. Diese können einzeln oder als Gemisch eingesetzt werden. Wird ein Polyalkylenether aus verschiedenen Monoepoxiden gewünscht, so sind dem Fachmann Möglichkeiten geläufig, statistische Copolymere oder Blockcopolymere aufzubauen.

Als aliphatische Diole eignen sich prinzipiell alle aliphatischen Diole, bevorzugt werden Diole mit primären Hydroxylgruppen, also Diole wie Ethylenglykol oder Diethylenglykol.

Als aromatische Diole haben sich insbesondere Resorzinol, Bisphenol A und Bisphenol F bewährt.

Zur Kettenverlängerung der Polyalkylenetherdiole eignen sich aromatische und aliphatische Diisocyanate. Auch diese Substanzklassen sind dem Fachmann geläufig, so daß hier nur stellvertretend einige geeignete Typen genannt werden sollen. Hierzu gehören Toluylendiisocyanat, 4,4'-Diisocyanatodiphenylmethan, Hexamethylendiisocyanat und Isophorondiisocyanat. Diese Isocyanate werden bei Raumtemperatur bzw. bei erhöhter Temperatur gegebenenfalls in Gegenwart von Lösemitteln, die nicht mit Isocyanatgruppen reagieren können, umgesetzt. Die Reaktion kann mit den üblichen Katalysatoren für die Isocyanat-Hydroxylgruppenreaktion beschleunigt werden. Insbesondere sind zinnorganische Verbindungen wie Dibutylzinndilaurat geeignet.

Die Polyalkylenetherdiole werden mit den Diisocyanaten in solchen stöchiometrischen Mengen umgesetzt, daß das Zwischenprodukt über endständige Isocyanatgruppen verfügt. Allgemein ausgedrückt ist das Verhältnis Polyalkylenether zu Diisocyanat etwa m: (m + 1) (d.h., das Diisocyanat wird in einem Überschuß von etwa einem Mol eingesetzt).

Diese endständigen Isocyanatgruppen werden nun in einer nachfolgenden Reaktionsstufe mit sekundären Aminen weiter umgesetzt. Die geeigneten sekundären Amine gehören zu den Dialkylaminen wie Dimethylamin oder Dibutylamin, zu den Alkylalkanolaminen wie Methylethanolamin oder Ethylethanolamin, zu den Dialkanolaminen wie Diethanolamin. Geeignet sind auch Polyamine mit einer sekundären Aminogruppe und weiteren primären Aminogruppen. Die primären Aminogruppen müssen jedoch vor der Umsetzung mit den isocyanatgruppenhaltigen Zwischenprodukten blockiert werden, um somit eine ungewünschte Kettenverlängerung oder ein Gelieren zu verhindern. Eine bestens bekannte Methode zum Blockieren primärer Aminogruppen ist die Umsetzung mit Ketonen. Ein Beispiel eines so modifizierten Polyamins ist das Diketimin aus Diethylentriamin und Methylisobutylketon. Die Ketimingruppen werden nach Überführung des Additivs in das wäßrige Milieu durch Spaltung durch das Wasser wieder zerstört, das heißt, das Additiv weist danach wieder primäre Aminogruppen auf.

Die Additive können bei der Herstellung der KTL-Bindemittel zugesetzt werden, sie können jedoch auch separat durch Zusatz von organischen Säuren und Wasser in die wäßrige Anlösung überführt werden. Diese wäßrige Anlösung kann nun bei Bedarf in geeigneten Mengen, vorzugsweise zwischen 1 und 20 Gewichtsteilen des Additivs (Festkörper) auf KTL-Bindemittel (Festkörper) dem KTL-Bad zugesetzt werden.

Die Herstellung und erfindungsgemäße Verwendung der Verlaufshilfsmittel wird im folgenden in Beispielen erläutert. Diese sollen jedoch den Erfindungsgedanken nicht einschränken.

Beispiele:

Die eingesetzten KTL-Bindemittel und Pigmentpasten entsprechen dem Beispiel 2

(Bindemitteldispersion) der DE-C 3108073 und dem Beispiel 7 (Pigmentpaste) der EP-A 102501.

1. Herstellung der Additive

Allgemeine Synthesevorschrift

Das Diisocyanat wird mit Methylisobutylketon (MIBK) in einem geeigneten Reaktionsgefäß unter Stickstoff vorgelegt, auf 50 ° C erwärmt und mit Dibutylzinndilaurat versetzt. Darauf läßt man das Polyalkylenetherdiol in solcher Geschwindigkeit zulaufen, daß die Temperatur 70 ° C nicht übersteigt. Sobald das theoretische NCO-Äquivalentgewicht erreicht ist, gibt man das sekundäre Amin zu. Man läßt die Temperatur auf 90 ° C ansteigen und hält diese, bis alle Isocyanatgruppen umgesetzt sind.

Additiv I

| | |
|---|---|
| 243,1 Teile | Hexamethylendiisocyanat |
| 364,6 Teile | Methylisobutylketon (MIBK) |
| 0,5 Teile | Dibutylzinndilaurat |
| 1162,8 Teile | ®Pluriol PE 3100[1)] |
| 349,7 Teile | Ketimin[2)] |

1) ®Pluriol PE 3100: Polyalkylenetherdiol der BASF AG, Copolymer auf Basis von Ethylenoxid-Propylenoxid, Molekulargewicht 1100
2) Ketimin: Umsetzungsprodukt aus Diethylentriamin und MIBK mit MIBK-Überschuß, Aminäquivalent 130.

Additiv II

| | |
|---|---|
| 122,4 Teile | Hexamethylendiisocyanat |
| 377,6 Teile | MIBK |
| 0,5 Teile | Dibutylzinndilaurat |
| 1300,8 Teile | ®Pluriol PE 6200[1)] |
| 89,4 Teile | Ketimin[2)] |
| 34,3 Teile | Methylethanolamin |

1) ®Pluriol PE 6200: Polyalkylenetherdiol der BASF AG, Copolymer auf Basis von Ethylenoxid - Propylenoxid, Molekulargewicht 2500
2) Ketimin: siehe Additiv I

Additiv III

| | |
|---|---|
| 190,7 Teile | Hexamethylendiisocyanat |
| 309,3 Teile | MIBK |
| 0,5 Teile | Dibutylzinndilaurat |
| 1045,3 Teile | ®Dianol 3310[1)] |
| 105,6 Teile | Ketimin[2)] |

1) ®Dianol 3310: Polyalkylenetherdiol der AKZO auf Basis ethoxiliertem Bisphenol A, Molekulargewicht 1020
2) Ketimin: siehe Additiv I

2. Abmischung der Dispersionen mit den Additiven

Die Herstellung der Bindemitteldispersion ist im Beispiel 2 der DE-C 3108073 beschrieben. Diese Dispersion ohne Zusätze dient als Vergleichsdispersion.

Dispersion Ia

203,5 Teile des Additivs I werden mit 7,22 Teilen Eisessig und 338,1 Teilen entionisiertem Wasser vermischt. Diese Additivmischung wird dann langsam in 4500 Teile Bindemitteldispersion eingerührt. Anschließend wird mit weiteren 1193,2 Teilen Wasser ein Festkörper von 30 % eingestellt. Der Gehalt an Additiv beträgt 9,5 % fest auf fest.

Dispersion Ib

Die Herstellung erfolgt analog Ia. Die Einwaagen sind:

| | |
|---|---|
| 278,4 Teile | Additiv I |
| 9,88 Teile | Eisessig |
| 462,5 Teile | entionisiertes Wasser |
| 4500,0 Teile | Bindemitteldispersion |
| 1205,4 Teile | entionisiertes Wasser |

Der Gehalt an Additiv beträgt 13 % fest auf fest.

Dispersion IIa

Die Herstellung erfolgt analog Ia. Die Einwaagen sind:

| | |
|---|---|
| 130,9 Teile | Additiv II |
| 3,63 Teile | Eisessig |
| 211,2 Teile | entionisiertes Wasser |
| 4500,0 Teile | Bindemitteldispersion |
| 1194,4 Teile | entionisiertes Wasser |

Der Gehalt an Additiv beträgt 6 % fest auf fest.

Dispersion IIb

Die Herstellung erfolgt analog Ia. Die Einwaagen sind:

| | |
|---|---|
| 207,2 Teile | Additiv II |
| 5,75 Teile | Eisessig |
| 334,2 Teile | entionisiertes Wasser |
| 4500,0 Teile | Bindemitteldispersion |
| 1193,2 Teile | entionisiertes Wasser |

Der Gehalt an Additiv beträgt 9,5 % fest auf fest.

Dispersion IIIa

Die Herstellung erfolgt analog Ia. Die Einwaagen sind:

| | |
|---|---|
| 128,7 Teile | Additiv III |
| 2,52 Teile | Eisessig |
| 213,3 Teile | entionisiertes Wasser |
| 4500,0 Teile | Bindemitteldispersion |
| 1194,4 Teile | entionisiertes Wasser |

Der Gehalt an Additiv beträgt 6 % fest auf fest.

Dispersion IIIb

Die Herstellung erfolgt analog Ia. Die Einwaagen sind:

| | |
|---|---|
| 278,8 Teile | Additiv III |
| 5,45 Teile | Eisessig |
| 462,2 Teile | entionisiertes Wasser |
| 4500,0 Teile | Bindemitteldispersion |
| 1205,4 Teile | entionisiertes Wasser |

Der Gehalt an Additiv betägt 13 % fest auf fest.

3. Herstellung der Lackbäder

In einem geeigneten Gefäß werden 1675 Teile entionisiertes Wasser vorgelegt und mit 25 Teilen 10%iger Essigsäure versetzt. Hierhinein werden 2279 Teile der Bindemitteldispersion und 775 Teile der Pigmentpaste eingerührt und mit 246 Teilen entionisiertem Wasser aufgefüllt. Von den Abscheidungen werden die Lackbäder 3 Tage unter Rühren gealtert.

4. Abscheidung der Lacke

Die Filme wurden auf zinkphosphatierten Stahlblechen, die als Kathode geschaltet wurden, während 2 min mit 300 V abgeschieden. Nach der üblichen Nachbehandlung wurden die Filme bei 175 ° C während 20 min eingebrannt.

5. Abscheideergebnisse

| Dispersion | Ia | Ib | IIa | IIb | IIIa | IIIb | Vergleich |
|---|---|---|---|---|---|---|---|
| Schichtdicke(/um) | 32 | 35 | 30 | 32 | 31 | 34 | 31 |
| Verlauf[1)] | 1 | 0,5 | 0,5 | 0 | 0,5 | 0 | 1,5 |
| Krater/$dm^2$ | 0 | 0 | 0,5 | 0 | 0,5 | 0 | 2 |

1) Verlauf: 0 bis 5 (gut - schlecht)

Diese Filme wurden nun mit einem handelsüblichen Wasserfüller und einem weißen Alkyddecklack versehen und 240 h im Schwitzwasser-Konstant-Klima getestet. Danach wurde die Haftung der Filme mittels Gitterschnitt und Tesaabriß geprüft.

| Dispersion | Ia | Ib | IIa | IIb | IIIa | IIIb | Vergleich |
|---|---|---|---|---|---|---|---|
| Haftung[1)] | 0,5 | 0 | 0,5 | 0 | 1 | 0 | 0,5 |

1) Note 0 bis 5 (gut - schlecht)

Die KTL-Bänder wurden anschließend mit 0,1% ASTM-Öl kontaminiert. Das Öl wurde an einem Tag eingerührt. Danach erfolgten Abscheidungen aus den Bädern wie oben beschrieben.

| Dispersion | Ia | Ib | IIa | IIb | IIIa | IIIb | Vergleich |
|---|---|---|---|---|---|---|---|
| Krater/$dm^2$ | 2 | 0 | 4 | 1 | 2 | 2 | 50 |

**Patentansprüche**

1. Wäßriger, kathodisch abscheidbarer Elektrotauchlack, dadurch gekennzeichnet, daß er ein Polyetherurethan als Verlaufshilfsmittel enthält, wobei das Polyetherurethan durch ein Herstellungsverfahren erhältlich ist, bei dem ein Polyalkylenetherdiol mit einem Überschuß an aromatischen und/oder aliphatischen Diisocyanaten zu einem Zwischen-produkt mit endständigen Isocyanatgruppen umgesetzt wird und diese Isocyanatgruppen anschließend mit sekundären Aminen, die gegebenenfalls auch blockierte primäre Aminogruppen enthalten können, umgesetzt werden.

2. Elektrotauchlack nach Anspruch 1, dadurch gekennzeichnet, daß das Polyetherurethan durch ein Herstellungsverfahren erhältlich ist, bei dem als Polyalkylenetherdiol ein Copolymer aus Ethylenoxid und Propylenoxid eingesetzt wird.

3. Elektrotauchlack nach Anspruch 1 oder 2, dadurch gekennzeichnet, daß das Polyetherurethan durch ein Herstellungsverfahren erhältlich ist, bei dem ein aliphatisches Diisocyanat eingesetzt wird.

4. Elektrotauchlack nach einem der Ansprüche 1 bis 3, dadurch gekennzeichnet, daß das Polyetherurethan durch ein Herstellungsverfahren erhältlich ist, bei dem ein aromatisches Diisocyanat eingesetzt wird.

5. Elektrotauchlack nach einem der Ansprüche 1 bis 4, dadurch gekennzeichnet, daß das Polyetherurethan durch ein Herstellungsverfahren erhältlich ist, bei dem ein Alkylalkanolamin oder ein Dialkanolamin eingesetzt wird.

6. Elektrotauchlack nach einem der Ansprüche 1 bis 5, dadurch gekennzeichnet, daß das Polyetherurethan durch ein Herstellungsverfahren erhältlich ist, bei dem ein sekundäres Amin eingesetzt wird, das eine oder mehrere blokkierte primäre Aminogruppen enthält.

7. Verwendung von Polyetherurethanen, die durch ein Herstellungsverfahren erhältlich sind, bei dem ein Polyalkylenetherdiol mit einem Überschuß an aromatischen und/ oder aliphatischen Diisocyanaten zu einem Zwischenprodukt mit endständigen Isocyanatgruppen umgesetzt wird und diese Isocyanatgruppen anschließend mit sekundären Aminen, die gegebenenfalls auch blockierte primäre Aminogruppen enthalten können, umgesetzt werden, als Verlaufshilfsmittel in wäßrigen, kathodisch abscheidbaren Elektrotauchlacken.

**Claims**

1. Water-borne, cathodically depositable electrocoating paint, characterized in that it contains a polyether

urethane as a flow-out agent, the polyether urethane being obtainable by a preparation process in which a polyalkylene ether diol is reacted with an excess of aromatic and/or aliphatic diisocyanates to form an intermediate possessing terminal isocyanate groups and these isocyanate groups are further reacted with secondary amines which may additionally contain blocked primary amino groups.

**2.** Electrocoating paint according to Claim 1, characterized in that the polyether urethane is obtainable by a preparation process in which a copolymer of ethylene oxide and propylene oxide is used as the polyalkylene ether diol.

**3.** Electrocoating paint according to Claim 1 or 2, characterized in that the polyether urethane is obtainable by a preparation process in which an aliphatic diisocyanate is used.

**4.** Electrocoating paint according to Claims 1 to 3 (sic), characterized in that the polyether urethane is obtainable by a preparation process in which an aromatic diisocyanate is used.

**5.** Electrocoating paint according to Claims 1 to 4, characterized in that the polyether urethane is obtainable by a preparation process in which an alkylalkanolamine or a dialkanolamine is used.

**6.** Electrocoating paint according to Claims 1 to 5, characterized in that the polyether urethane is obtainable by a preparation process in which a secondary amine is used which contains one or more blocked primary amino groups.

**7.** Use of polyether urethanes obtainable by a preparation process in which a polyalkylene ether diol is reacted with an excess of aromatic and/or aliphatic diisocyanates to form an intermediate possessing terminal isocyanate groups and these isocyanate groups are further reacted with secondary amines which may additionally contain blocked primary amino groups, as flow-out agents in water-borne, cathodically depositable electrocoating paints.

**Revendications**

**1.** Laque aqueuse d'électrodéposition, susceptible d'être déposée à la cathode, caractérisée par le fait qu'elle contient un polyétheruréthanne comme adjuvant favorisant l'écoulement, le polyétheruréthanne pouvant être obtenu par un procédé de fabrication suivant lequel un polyalkylèneétherdiol est mis à réagir avec un excès en diisocyanates aromatiques et/ou aliphatiques pour obtenir un produit intermédiaire présentant des groupes isocyanate terminaux, et ces groupes isocyanate sont mis à réagir ensuite avec des amines secondaires qui peuvent contenir le cas échéant également des groupes amino primaires bloqués.

**2.** Laque d'électrodéposition selon la revendication 1, caractérisée par le fait que le polyétheruréthanne peut être obtenu par un procédé de fabrication suivant lequel, comme polyalkylèneétherdiol, on utilise un copolymère d'oxyde d'éthylène et d'oxyde de propylène.

**3.** Laque d'électrodéposition selon l'une des revendications 1 et 2, caractérisée par le fait que le polyétheruréthanne peut être obtenu par un procédé de fabrication suivant lequel on utilise un diisocyanate aliphatique.

**4.** Laque d'électrodéposition selon l'une quelconque des revendications 1 à 3, caractérisée par le fait que le polyétheruréthanne peut être obtenu par un procédé de fabrication suivant lequel on utilise un diisocyanate aromatique.

**5.** Laque d'électrodéposition selon l'une quelconque des revendications 1 à 4, caractérisée par le fait que le polyétheruréthanne peut être obtenu par un procédé de fabrication suivant lequel on utilise une alkylalcanolamine ou une dialcanolamine.

**6.** Laque d'électrodéposition selon l'une quelconque des revendications 1 à 5, caractérisée par le fait que le polyétheruréthanne peut être obtenu par un procédé de fabrication suivant lequel on utilise une amine secondaire qui contient un ou plusieurs groupes amino primaires bloqués.

**7.** Utilisation, comme adjuvants favorisant l'écoulement dans des laques aqueuses d'électrodéposition, susceptibles d'être déposées à la cathode, de polyétheruréthannes qui peuvent être obtenus par un procédé de fabrication suivant lequel un polyalkylèneétherdiol est mis à réagir avec un excès en diisocyanates aromatiques et/ou aliphatiques pour obtenir un produit intermédiaire ayant des groupes isocyanate terminaux, et ces groupes isocyanate sont ensuite mis à réagir avec des amines secondaires qui peuvent contenir le cas échéant également des groupes amino primaires bloqués.